Europäisches Patentamt

European Patent Office

Office européen des brevets

(19)

(11) EP 1 065 413 B1

(12) FASCICULE DE BREVET EUROPEEN

(45) Date de publication et mention
de la délivrance du brevet:
**15.01.2003 Bulletin 2003/03**

(51) Int Cl.⁷: **F16H 61/02**, B60K 41/22

(21) Numéro de dépôt: **00401823.0**

(22) Date de dépôt: **26.06.2000**

(54) **Système de commande d'une boîte de vitesses mécanique d'un véhicule automobile**

Steuereinrichtung für ein mechanisches Kraftfahrzeug-Schaltgetriebe

A control system for a mechanical vehicle gear box

(84) Etats contractants désignés:
**AT BE CH CY DE DK ES FI FR GB GR IE IT LI LU
MC NL PT SE**

(30) Priorité: **29.06.1999 FR 9908327**

(43) Date de publication de la demande:
**03.01.2001 Bulletin 2001/01**

(73) Titulaire: **Peugeot Citroen Automobiles SA
92200 Neuilly sur Seine (FR)**

(72) Inventeurs:
• **Sauvonnet, Franck
91330 Yerres (FR)**

• **Ottavi, Laurent
94800 Villejuif (FR)**

(74) Mandataire:
**Habasque, Etienne Joel Jean-François et al
Cabinet Lavoix
2, Place d'Estienne d'Orves
75441 Paris Cédex 09 (FR)**

(56) Documents cités:
**WO-A-96/07559** **DE-A- 19 858 373**

## Description

La présente invention concerne un système de commande d'une boîte de vitesses mécanique d'un véhicule automobile associée à un mécanisme d'embrayage.

On connaît déjà dans l'état de la technique, des systèmes de commande de ce type pour des boites de vitesses dites " robotisées " qui comportent:

- des moyens d'acquisition d'informations relatives aux conditions de déplacement du véhicule,
- des moyens d'acquisition d'informations relatives aux conditions de fonctionnement du moteur du véhicule,
- des moyens d'acquisition d'informations relatives à l'état de commande de la boîte de vitesses,
- des moyens d'acquisition d'informations relatives à la conduite du véhicule par le conducteur de celui-ci, et
- des moyens d'analyse de ces informations pour déterminer un rapport de boîte de vitesses et pour délivrer des ordres de commande correspondants de moyens d'actionnement du mécanisme d'embrayage et de la boîte de vitesses pour engager ce rapport.

Dans les systèmes de commande de ce type, le mécanisme d'embrayage et la boîte de vitesses sont donc pilotés par un calculateur qui, d'une part, détermine le rapport de boîte à engager et, d'autre part, assure la gestion du couple aux roues motrices du véhicule.

On conçoit alors que le conducteur du véhicule perd la maîtrise de l'effort sur ces roues, ce qui rend relativement difficile notamment les manoeuvres de parcage du véhicule et de démarrage en côte (manoeuvrabilité et dosabilité).

En effet, ce type de dispositifs permet au conducteur de décider de l'instant du passage du rapport mais c'est le calculateur qui gère le débrayage et l'embrayage du mécanisme d'embrayage.

On connaît également du document WO-A-96 07 559, un système conforme au préambule de la revendication 1, dans lequel les changements de rapports demandés peuvent poser des problèmes de conduite du véhicule.

Le but de l'invention est donc de résoudre ces problèmes.

A cet effet, l'invention a pour objet un système de commande d'une boîte de vitesses mécanique d'un véhicule automobile associée à un mécanisme d'embrayage, du type comportant

- des moyens d'acquisition d'informations relatives aux conditions de déplacement du véhicule,
- des moyens d'acquisition d'informations relatives aux conditions de fonctionnement du moteur du véhicule,
- des moyens d'acquisition d'informations relatives à l'état de commande de la boîte de vitesses,
- des moyens d'acquisition d'informations relatives à la conduite du véhicule par le conducteur de celui-ci,

le mécanisme d'embrayage étant associé à une pédalé d'embrayage/débrayage, permettant au conducteur du véhicule de doser le niveau d'embrayage/débrayage de celui-ci, et dans lequel le système comporte en outre des moyens d'analyse des informations acquises, comprenant des moyens de détection de l'enfoncement de cette pédale d'embrayage/débrayage par le conducteur, pour détecter une volonté de changement de rapport de la boîte, déterminer un nouveau rapport de boîte et délivrer les ordres correspondants de commande de celle-ci pour engager ce rapport, caractérisé en ce que les moyens d'analyse sont adaptés pour déterminer, pour différents critères, des vecteurs d'informations contenant une information de changement de rapport souhaité, associée à un degré de confiance, et pour fusionner ces différents vecteurs en fonction de priorités relatives de ceux-ci, afin d'en extraire une décision de changement du rapport de la boîte de vitesses automatique.

L'invention sera mieux comprise à la lecture de la description qui va suivre, donnée uniquement à titre d'exemple et faite en se référant aux dessins annexés, sur lesquels

- la figure 1 représente un schéma synoptique illustrant la structure générale d'un système de commande selon l'invention ;
- la figure 2 illustre le fonctionnement général d'un tel système ;
- les figures 3, 4 et 5 illustrent l'analyse d'une volonté de changement de rapport par le conducteur du véhicule par actionnement de la pédale de frein de celui-ci ;
- les figures 6 et 7 illustrent l'analyse du comportement du conducteur du véhicule pour déterminer un changement de rapport de boîte; et
- la figure 8 illustre l'analyse d'un critère d'interface.

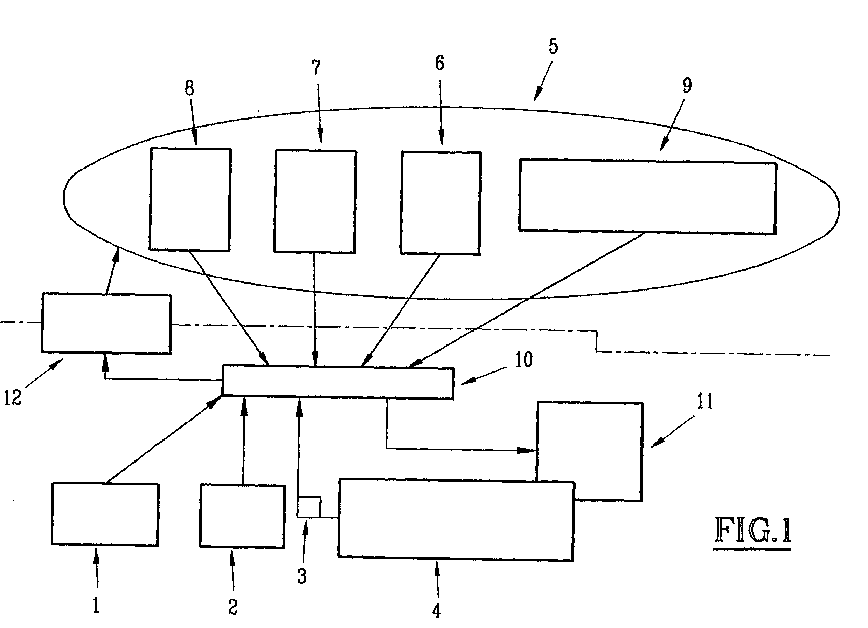

On a en effet représenté sur la figure 1, la structure générale d'un système de commande d'une boîte de vitesses mécanique d'un véhicule automobile associée à un mécanisme d'embrayage.

Un tel système comporte différents moyens d'acquisition d'informations tels que par exemple des moyens, désignés par la référence générale 1, d'acquisition d'informations relatives aux conditions de déplacement du véhicule, des moyens 2 d'acquisition d'informations relatives aux conditions de fonctionnement du moteur du véhicule, des moyens 3 d'acquisition d'informations relatives à l'état de commande de la boîte de vitesses 4 du véhicule et des moyens désignés par la référence générale 5, d'acquisition d'informations relatives à la conduite du véhicule par le conducteur de celui-ci.

Ces moyens comprennent par exemple des moyens de détection de l'activation de la pédale d'accélérateur du véhicule, désignés par la référence générale 6, des moyens de détection de l'activation de la pédale de frein du véhicule, désignés par la référence générale 7, et des moyens de détection de l'activation de la pédale d'embrayage/ débrayage du véhicule, désignés par la référence générale 8, cette pédale étant associée au mécanisme d'embrayage associé à la boîte de vitesses 4.

De plus, ces moyens 5 peuvent également comporter des moyens d'acquisition d'informations supplémentaires, désignés par la référence générale 9 sur cette figure, relatifs par exemple à la sélection du mode de déplacement, au style de conduite et au comportement du conducteur, de façon classique et au régime moteur, à l'accélération du véhicule, à la vitesse de celui-ci, au rapport de boîte, etc...

Ces différents moyens comprennent par exemple des organes d'entrée d'informations, actionnables par un utilisateur et comportant par exemple des leviers à impulsions ou séquentiels, des interrupteurs, des boutons poussoirs, etc....

Ces différentes informations sont alors transmises à un calculateur désigné par la référence générale 10, adapté pour analyser ces informations afin de déterminer un rapport de boîte de vitesses et pour délivrer des ordres de commande correspondants à des moyens d'actionnement de la boîte de vitesses pour engager ce rapport.

Sur cette figure 1, ces moyens sont désignés par la référence générale 11 et sont donc pilotés par le calculateur 10 pour engager la boîte de vitesses sur le rapport déterminé par le calculateur 10.

Le calculateur 10 est également adapté pour piloter des moyens d'avertissement du conducteur du véhicule, désignés par la référence générale 12 et comprenant par exemple des moyens d'affichage du rapport de boîte engagé, etc....

Le calculateur 10 fonctionne alors de manière classique en analysant les différentes informations acquises pour déterminer un rapport de boîte à engager et délivrer des ordres de commande correspondants des moyens d'actionnement 11 de la boîte de vitesses.

Comme cela a été indiqué précédemment, le mécanisme d'embrayage est également associé à une pédale d'embrayage/débrayage qui permet au conducteur du véhicule de doser le niveau d'embrayage/débrayage de celui-ci.

De plus, les moyens d'analyse formés par le calculateur 10 comprennent des moyens de détection de l'enfoncement de cette pédale d'embrayage/débrayage par le conducteur du véhicule pour détecter une volonté de changement de rapport de la boîte, déterminer un nouveau rapport de boîte et délivrer les ordres correspondants de commande de celle-ci pour engager ce rapport.

On conçoit en effet que le conducteur du véhicule peut souhaiter déclencher un changement de rapport de boîte en enfonçant cette pédale d'embrayage/débrayage.

Cette volonté de changement de rapport, complétée par les informations issues des différents capteurs du véhicule et de la boîte de vitesses, permet au calculateur 10 de déterminer un nouveau rapport de boîte de vitesses.

Ce nouveau rapport de boîte peut alors être engagé par la boîte de vitesses sous le contrôle du calculateur ou d'un calculateur dédié.

En fait, ce calculateur est adapté pour déterminer pour différents critères, des vecteurs d'informations contenant une information de changement de rapport de boîte souhaité, associée à un degré de confiance et pour fusionner ces différents vecteurs en fonction de priorités relatives de ceux-ci, afin d'en extraire une décision de changement de rapport de la boîte de vitesses.

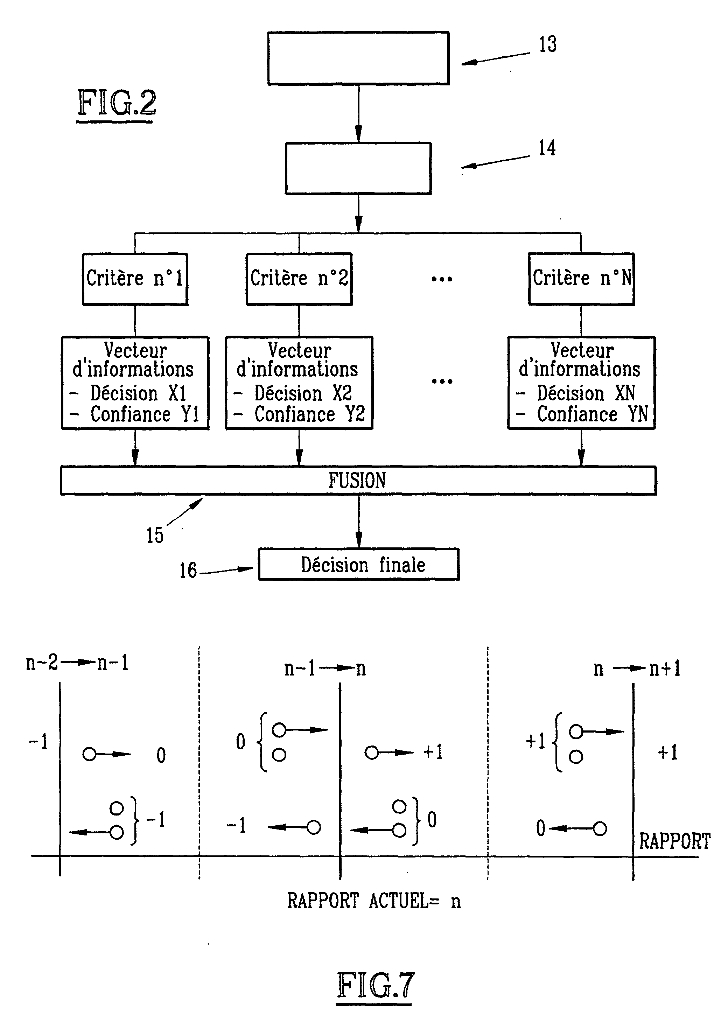

Ce fonctionnement est illustré sur la figure 2, où l'on peut constater que, après la phase d'acquisition des différentes informations mentionnées précédemment, cette phase étant désignée par la référence générale 13 sur cette figure 2, le calculateur met en oeuvre une étape de traitement de ces informations, désignée par la référence générale 14, au cours de laquelle, pour différents critères par exemple au nombre de N, le calculateur détermine, pour chacun de ces critères, un vecteur d'informations de changement de rapport de boîte souhaité, c'est-à-dire une décision $X_N$ associée à un degré de confiance $Y_N$.

Après détermination de ces différents vecteurs d'informations, le calculateur 10 met en oeuvre une étape de fusion de ces critères permettant d'aboutir à une décision finale de changement de rapport lors de l'étape 16, en fonction des confiances accordées aux différents vecteurs d'informations déterminés et de leur importance relative en fonction de priorités relatives de ceux-ci.

C'est ainsi par exemple que ces critères peuvent comprendre en outre des critères de sécurité, par analyse des actions du conducteur du véhicule sur la pédale de frein de celui-ci, de comportement, par analyse du comportement du conducteur du véhicule, de puissance maximale pour délivrer le plus grand potentiel de puissance du véhicule, d'interface, par exemple par analyse du temps s'écoulant entre le relâchement de la pédale d'accélérateur et l'enfoncement de la pédale d'embrayage du véhicule, de consommation minimale, pour permettre une consommation réduite du véhicule, d'environnement, pour adapter le fonctionnement du véhicule au profil de la route sur laquelle se déplace le véhicule et d'anti-patinage, pour éviter le patinage des roues motrices du véhicule, etc....

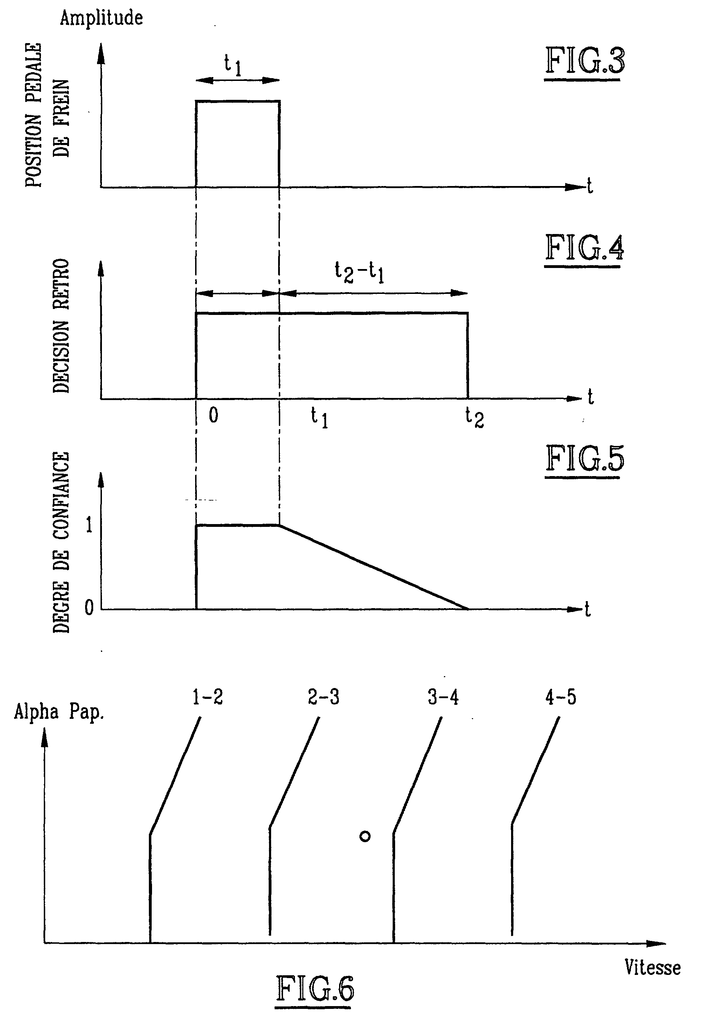

L'analyse opérée par le calculateur 10 pour le critère de sécurité est illustrée sur les figures 3, 4 et 5.

Ainsi par exemple, pour ce critère de sécurité, le calculateur 10 est adapté pour délivrer une information de descente des rapports de la boîte de vitesses, avec un degré de confiance, dès que la pédale de frein est actionnée par le conducteur du véhicule et tant que celle-ci est actionnée, et avec un degré de confiance décroissant pendant une période de temps déterminée en fonction de l'amplitude de cet actionnement de la pédale, après le relâchement de cette pédale de frein.

Ainsi, dès que le conducteur du véhicule appuie sur la pédale de frein du véhicule, toute demande de passage de rapport de vitesses est considérée comme une volonté de passage de rapport descendant.

Pendant toute la durée du freinage, c'est-à-dire pendant la période de temps t1, tout changement de rapport souhaité est un passage descendant.

Lorsque le conducteur du véhicule relâche la pédale de frein, la décision de passage descendant de rapport est maintenue pendant une période de temps t2 - t1, dépendant de l'amplitude du signal, c'est-à-dire en fait de l'amplitude de l'enfoncement de cette pédale. Cependant, le degré de confiance dans cette décision décroît depuis sa valeur à l'instant t1 à 0 à l'instant t2, après une période de temps prédéterminée.

Ceci constitue le vecteur d'informations relatif au critère de sécurité.

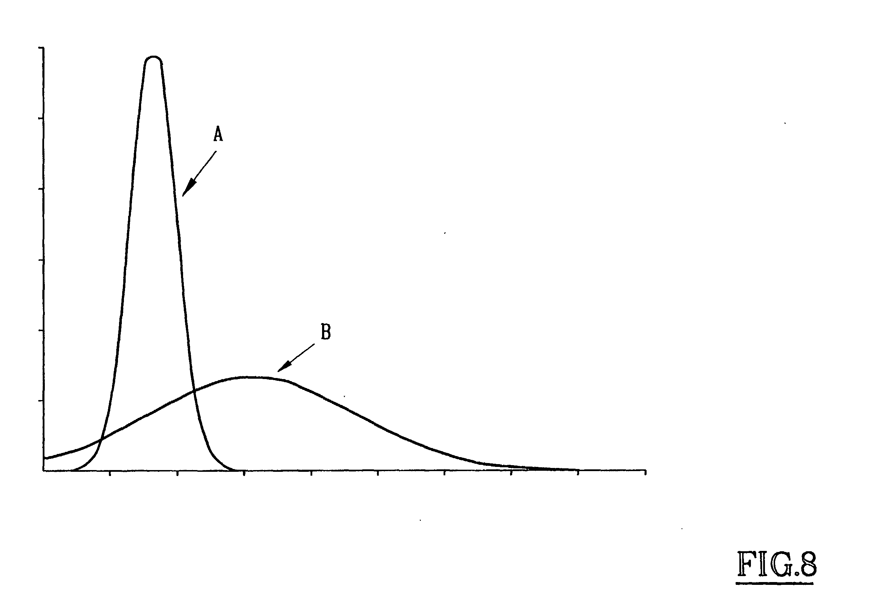

On a représenté sur les figures 6 et 7, la détermination du vecteur d'informations concernant le critère de comportement du conducteur ou d'adaptation à la charge.

Lors de cette détermination, le calculateur détermine un rapport continu en fonction de l'état actuel du véhicule (AlphaPap, Vitesse véhicule) et des frontières entre les différents rapports obtenus pour un régime de fonctionnement donné du moteur.

Cette décision prend en compte le rapport de boîte actuel, la position et l'évolution du point de fonctionnement courant du véhicule et les lois de passage des rapports de la boîte, avec un degré de confiance établi en fonction de la proximité d'une frontière de passage de rapport et du comportement du conducteur.

L'algorithme mis en oeuvre est illustré sur la figure 7.

Sur cette figure, une flèche indique un sens de variation.

En sortie, trois décisions sont donc possibles, à savoir, une décision de passage descendant de rapport (-1), une incertitude (0) et une décision de passage montant des rapports (+1).

Les deux facteurs influençant le degré de confiance de la décision sont donc la proximité de l'état actuel de fonctionnement en vitesse et position du papillon des gaz du moteur (vitesse véhicule - AlphaPap) d'une frontière et la corrélation entre les lois utilisées dans l'algorithme et le style de conduite du conducteur.

Un degré de confiance peut être accordé pour la décision et un autre pour le comportement du conducteur.

Le critère de puissance maximale doit, quant à lui, répondre à un compromis permettant de choisir un rapport de boîte de vitesses offrant la plus grande puissance instantanée et le plus grand potentiel futur (utilité).

Pour ce critère, différents paramètres peuvent être utilisés comme, par exemple, le modèle moteur, c'est-à-dire en fait la cartographie, le modèle de boîte de vitesses, c'est-à-dire en fait sa démultiplication, la vitesse actuelle du véhicule, c'est-à-dire sa vitesse instantanée.

En sortie, des décisions de descente d'un ou de deux rapports, d'incertitude ou de montée d'un rapport, peuvent être prises.

Ces décisions sont associées à un degré de confiance dans la satisfaction d'un compromis.

Pour le critère d'interface, on analyse les actions successives du conducteur du véhicule sur les pédales d'accélérateur et d'embrayage et par exemple le temps s'écoulant entre le relâchement de la pédale d'accélérateur et l'enfoncement de la pédale d'embrayage du véhicule.

Cette variable est en effet pertinente dans la détermination de la volonté du conducteur du véhicule lors d'un changement de rapport.

Cette analyse permet en effet de faire assez nettement la différence, du point de vue statistique, entre les passages montants et les passages descendants de rapports de la boîte (voir figure 8).

Dans une moindre mesure, la vitesse de relâchement de la pédale d'accélérateur peut également être significative du sens de changement souhaité par le conducteur.

Comme cela ressort de la figure 8, des lois normales caractérisées par une moyenne et un écart type, modélisent les relations entre ce temps et le sens du changement de rapport.

Sur cette figure 8, la loi A correspond aux passages montants, tandis que la loi B correspond aux passages descendants.

Cette analyse se fait donc dans un premier temps par exemple par détermination du temps s'écoulant entre ces deux actions, en fonction des positions actuelles et passées de ces pédales et dans un deuxième temps, en calculant le degré de confiance correspondant selon les relations :

$$\text{Confiance \_ Montant} = \text{Fonction [Loi normale; passage montant (t)]}$$

$$\text{Confiance \_ Descendant} = \text{Fonction [Loi normale; passage descendant (t)]}$$

et enfin en délivrant en sortie, une décision de montée/descente des rapports associée à un degré de confiance correspondant.

Bien entendu, d'autres modes de détermination peuvent être mis en oeuvre.

On conçoit alors que le système selon l'invention présente un certain nombre d'avantages par rapport aux systèmes de l'état de la technique, car il permet de conserver la maîtrise du couple appliqué aux roues et l'instant du changement de rapport de la boîte de vitesses.

Une telle structure permet également de simplifier l'interface homme/machine, en implantant par exemple des moyens simplifiés de sélection du mode de déplacement du véhicule, formés par exemple par une manette ou des boutons poussoirs, implantés par exemple sur le volant du véhicule ou autres.

Ceci permet alors au conducteur du véhicule de conserver les deux mains sur le volant lors d'un changement de rapport de boîte de vitesses, ce qui permet d'améliorer la sécurité de conduite du véhicule.

Bien entendu, d'autres modes de réalisation de ce système peuvent être envisagés.

**Revendications**

1. Système de commande d'une boîte de vitesses mécanique d'un véhicule automobile associée à un mécanisme d'embrayage, du type comportant :

   - des moyens (1) d'acquisition d'informations relatives aux conditions de déplacement du véhicule,
   - des moyens (2) d'acquisition d'informations relatives aux conditions de fonctionnement du moteur du véhicule,
   - des moyens (3) d'acquisition d'informations relatives à l'état de commande de la boîte de vitesses (4),
   - des moyens (5) d'acquisition d'informations relatives à la conduite du véhicule par le conducteur de celui-ci,

   le mécanisme d'embrayage étant associé à une pédale d'emd'embrayage/débrayage, permettant au conducteur du véhicule de doser le niveau d'embrayage/débrayage de celui-ci, et dans lequel le système comporte en outre des moyens d'analyse (10) des informations acquises, comprenant des moyens de détection de l'enfoncement de cette pédale d'embrayage/débrayage par le conducteur, pour détecter une volonté de changement de rapport de la boîte, déterminer un nouveau rapport de boîte et délivrer les ordres correspondants de commande de celle-ci pour engager ce rapport, **caractérisé en ce que** les moyens d'analyse (10) sont adaptés pour déterminer, pour différents critères, des vecteurs d'informations contenant une information de changement de rapport souhaité (XN), associée à un degré de confiance (YN), et pour fusionner (15) ces différents vecteurs en fonction de priorités relatives de ceux-ci, afin d'en extraire (16) une décision de changement du rapport de la boîte de vitesses automatique.

2. Système selon la revendication 1, **caractérisé en ce que** les critères comprennent en outre des critères :

   - de sécurité, par analyse des actions du conducteur du véhicule sur la pédale de frein de ce véhicule,
   - de comportement ou d'adaptation à la charge, par analyse du comportement du conducteur du véhicule,
   - de puissance maximale, pour délivrer le plus grand potentiel de puissance du véhicule,
   - d'interface, par analyse des actions du conducteur sur la pédale d'accélérateur et la pédale d'embrayage du véhicule,
   - de consommation minimale, pour permettre une consommation réduite du véhicule,
   - d'environnement, pour adapter le fonctionnement du véhicule au profil de la route sur laquelle se déplace le véhicule,
   - d'anti-patinage, pour éviter le patinage des roues motrices du véhicule.

3. Système selon la revendication 2, **caractérisé en ce que** pour le critère de sécurité, les moyens d'analyse (10) sont adaptés pour délivrer une information de descente des rapports de la boîte de vitesses, avec un degré de confiance maximal dès que la pédale de frein est actionnée par le conducteur du véhicule et tant que celle-ci est actionnée, et avec un degré de confiance décroissant pendant une période de temps déterminée en fonction de l'amplitude de cet actionnement de la pédale, après le relâchement de celle-ci.

**4.** Système selon la revendication 2 ou 3, **caractérisé en ce que** pour le critère de comportement ou d'adaptation à la charge, les moyens d'analyse (10) sont adaptés pour délivrer un rapport continu de boîte de vitesses automatique en fonction de la position du papillon des gaz (AlphaPap) du moteur du véhicule, de la vitesse de celui-ci, du rapport de boîte actuel, de la position et de l'évolution du point de fonctionnement courant du véhicule et des lois de passage des rapports de la boîte, avec un degré de confiance établi en fonction de la proximité d'une frontière de passage de rapport et du comportement du conducteur.

**5.** Système selon la revendication 2, 3 ou 4, **caractérisé en ce que** pour le critère de puissance maximale, les moyens d'analyse (10) sont adaptés pour délivrer une information de rapport de boîte de vitesses offrant la plus grande puissance instantanée et le plus grand potentiel futur à partir d'informations de cartographie du moteur, de démultiplication de la boîte de vitesses et de vitesse instantanée du véhicule.

**6.** Système selon la revendication 2,3,4 ou 5, **caractérisé en ce que**, pour le critère d'interface, les moyens d'analyse (10) sont adaptés pour analyser le temps s'écoulant entre le relâchement de la pédale d'accélérateur et l'enfoncement de la pédale d'embrayage du véhicule par le conducteur.

**7.** Système selon la revendication 2,3,4 ou 5, **caractérisé en ce que**, pour le critère d'interface, les moyens d'analyse (10) sont adaptés pour analyser la vitesse de relâchement de la pédale d'accélérateur du véhicule par le conducteur.

**8.** Système selon l'une quelconque des revendications précédentes, **caractérisé en ce que** les moyens d'acquisition d'informations relatives à la conduite du véhicule par le conducteur de celui-ci comprennent des moyens de détection (6, 7, 8) de l'activation des pédales d'accélérateur, de frein et d'embrayage/débrayage du véhicule et des moyens (9) d'entrée d'informations supplémentaires de conduite du véhicule relatives à la sélection du mode de déplacement de celui-ci, au style de conduite et au comportement du conducteur et des variables relatives au véhicule.

**9.** Système selon la revendication 8, **caractérisé en ce que** les moyens (9) d'entrée d'informations supplémentaires relatives à la conduite du véhicule comprennent des leviers à impulsions ou séquentiels et/ou des boutons poussoirs.

## Claims

**1.** Control system for a mechanical automotive gear box associated with a clutch mechanism, featuring:

- means (1) for acquiring data on the travelling conditions of the vehicle,
- means (2) for acquiring data on the operating conditions of the vehicle's engine,
- means (3) for acquiring data on the control mode of the gearbox (4),
- means (5) for acquiring data on how the vehicle is being driven by the driver thereof,

the clutch mechanism being associated with a clutch engaging/disengaging pedal which enables the driver of the vehicle to proportion the level of clutch engagement/disengagement thereof, and wherein the system furthermore includes means (10) for analysing the data acquired, comprising means for detecting the degree to which the driver depresses said clutch engaging/disengaging pedal, in order to detect an intention to alter the gear ratio, set a new gear ratio and supply the corresponding commands controlling the latter in order to engage said ratio, **characterised in that** the analytical means (10) are adapted to determine, in respect of different criteria, data vectors containing a desired ratio change datum (XN), associated with a confidence level (YN), and to merge (15) these different vectors as a function of relative priorities thereof, in order to extract (16) therefrom an automatic decision to alter the gearbox ratio.

**2.** System according to claim 1, **characterised in that** the criteria furthermore comprise:

- safety criteria, by analysing the actions of the vehicle driver on the brake pedal of said vehicle,
- behavioural or load adaptation criteria, by analysing the behaviour of the vehicle driver,
- maximum power criteria, in order to deliver the maximum performance of which the vehicle is capable,
- interfacing criteria, by analysing the driver's actions on the accelerator pedal and clutch pedal of the vehicle,
- minimum consumption criteria, to permit a low level of consumption by the vehicle,

- environmental criteria, to adapt the operation of the vehicle to the profile of the road along which the vehicle is travelling,
- anti-skid criteria, to prevent the driving wheels of the vehicle from skidding.

3. System according to claim 2, **characterised in that** in respect of the safety criterion the analytical means (10) are adapted to supply a stepdown gearbox ratio datum, with a maximum confidence level once the vehicle driver operates the brake pedal and for as long as the latter is operated, and with a decreasing confidence level for a period of time determined as a function of the extent of said pedal operation, once the pedal has been released.

4. System according to claim 2 or 3, **characterised in that** in respect of the behavioural or load adaptation criterion, the analaytical means (10) are adapted to supply a continuous automatic gearbox ratio as a function of the position of the throttle valve (AlphaPap) of the engine of the vehicle, of the latter's speed, of the current gear ratio, of the position and evolution of the vehicle's current operating point, and of the principles underlying the gear ratio zones, with a confidence level decided in response to the proximity of a ratio zone boundary and of the driver's behaviour.

5. System according to claim 2, 3 or 4, **characterised in that** in respect of the maximum power criterion, the analytical means (10) are adapted to supply a gearbox ratio datum that offers the maximum power at any given moment and the maximum future performance based on engine mapping data, gear reduction data and instantaneous vehicle speed data.

6. System according to claim 2, 3, 4 or 5, **characterised in that** in respect of the interfacing criterion, the analytical means (10) are adapted to analyse the time that elapses between when the driver releases the accelerator pedal and when the driver depresses the clutch pedal of the vehicle.

7. System according to claim 2, 3, 4 or 5, **characterised in that** in respect of the interfacing criterion, the analytical means (10) are adapted to analyse the speed at which the driver releases the accelerator pedal of the vehicle.

8. System according to any of the preceding claims, **characterised in that** the means for acquiring data on how the driver is driving the vehicle comprise means (6, 7, 8) for detecting operation of the accelerator pedal, brake pedal and clutch engaging/disengaging pedal of the vehicle, and means (9) for inputting additional data on how the vehicle is being driven, relating to the selection of the travelling mode thereof, to the driving style and behaviour of the driver, and of variables relating to the vehicle.

9. System according to claim 8, **characterised in that** the means (9) for inputting additional data relating to how the vehicle is being driven comprise pulsed or sequential levers and/or push-buttons.

**Patentansprüche**

1. System zum Steuern eines einem Kupplungsmechanismus zugeordneten mechanischen Kraftfahrzeug-Schaltgetriebes, mit folgenden Merkmalen:

- einer Einrichtung (1) zum Erfassen von Daten bezüglich der Fahrbedingungen des Fahrzeugs,
- einer Einrichtung (2) zum Erfassen von Daten bezüglich der Arbeitsbedingungen des Fahrzeugmotors,
- einer Einrichtung (3) zum Erfassen von Daten bezüglich des Steuerungszustands des Getriebes (4),
- einer Einrichtung (5) zum Erfassen von Daten bezüglich der Führung des Fahrzeugs durch dessen Fahrer,

wobei der Kupplungsmechanismus einem Ein-/Auskuppelpedal zugeordnet ist, das dem Fahrer des Fahrzeugs ermöglicht, dessen Ein-/Auskuppelniveau zu dosieren, und wobei das System ferner eine Einrichtung (10) zur Analyse der erfassten Daten aufweist, mit einer Einrichtung zum Erfassen, wie tief das Ein/Auskuppelpedal vom Fahrer gedrückt wird, um einen Gangwechselwunsch zu erfassen, einen neuen Getriebegang zu bestimmen und die entsprechenden Befehle zum Steuern des Getriebes auszugeben, um den betreffenden Gang einzulegen, **dadurch gekennzeichnet, dass** die Analyseeinrichtung (10) ausgebildet ist, für verschiedene Kriterien Datenvektoren zu bestimmen, die eine mit einem Vertrauensgrad (YN) zusammenhängende Information (XN) bezüglich des gewünschten Gangwechsels enthalten, und diese verschiedenen Vektoren in Abhängigkeit von relativen Prioritäten derselben zu verschmelzen (15), um daraus eine Entscheidung für einen automatischen Getriebegangwechsel herzuleiten (16).

**2.** System nach Anspruch 1, **dadurch gekennzeichnet, dass** die Kriterien ferner umfassen:

- ein Sicherheitskriterium, durch Analyse der Einwirkung des Fahrers des Fahrzeugs auf das Bremspedal des Fahrzeugs,
- ein Verhaltenskriterium oder Lastanpassungskriterium, durch Analyse des Verhaltens des Fahrers des Fahrzeugs,
- ein Kriterium maximaler Leistung, um das größtmögliche Leistungspotential des Fahrzeugs abzugeben,
- ein Schnittstellenkriterium, durch Analyse der Betätigung des Gaspedals und des Kupplungspedals durch den Fahrer,
- ein Kriterium minimalen Verbrauchs, um einen verringerten Verbrauch des Fahrzeugs zu ermöglichen,
- ein Umgebungskriterium, um den Betrieb des Fahrzeugs dem Profil der vom Fahrzeug befahrenen Straße anzupassen,
- ein Antischlupfkriterium, um ein Durchdrehen der Antriebsräder des Fahrzeugs zu vermeiden.

**3.** System nach Anspruch 2, **dadurch gekennzeichnet, dass** hinsichtlich des Sicherheitskriteriums die Analyseeinrichtung (10) ausgebildet ist, Daten zum Herunterschalten des Getriebes mit einem maximalen Vertrauensgrad auszugeben, sobald vom Fahrzeugführer das Bremspedal betätigt wird und solange dieses betätigt bleibt, und nach dem Loslassen des Bremspedals mit einem abnehmenden Vertrauensgrad während einer Zeitspanne, die von der Amplitude der Pedalbetätigung abhängt.

**4.** System nach Anspruch 2 oder 3, **dadurch gekennzeichnet, dass** hinsichtlich des Verhaltenskriteriums oder Lastanpassungskriteriums die Analyseeinrichtung (10) ausgebildet ist, ein kontinuierliches Übersetzungsverhältnis des automatischen Getriebes in Abhängigkeit von der Stellung der Drosselklappe (Winkel der Drosselklappe) des Motors des Fahrzeugs, der Geschwindigkeit des Fahrzeugs, des aktuell eingelegten Gangs, der Lage und Entwicklung des laufenden Betriebspunkts des Fahrzeugs und den Schaltkennlinien des Getriebes auszugeben, mit einem Vertrauensgrad, der in Abhängigkeit von der Nähe einer Gangwechselgrenze und dem Verhalten des Fahrers ermittelt wird.

**5.** System nach Anspruch 2, 3 oder 4, **dadurch gekennzeichnet, dass** hinsichtlich des Kriteriums maximaler Leistung die Analyseeinrichtung (10) ausgebildet ist, ausgehend vom Kennlinienfeld des Motors, den Übersetzungsverhältnissen des Getriebes und der augenblicklichen Geschwindigkeit des Fahrzeugs Daten bezüglich des Gangs auszugeben, der die größtmögliche Augenblicksleistung und das größte zukünftige Potential bietet.

**6.** System nach Anspruch 2, 3, 4 oder 5, **dadurch gekennzeichnet, dass** hinsichtlich des Schnittstellenkriteriums die Analyseeinrichtung (10) ausgebildet ist, die Zeit zu analysieren, die zwischen dem Loslassen des Gaspedals und dem Niederdrücken des Kupplungspedals des Fahrzeugs durch den Fahrer verstreicht.

**7.** System nach Anspruch 2, 3, 4 oder 5, **dadurch gekennzeichnet, dass** hinsichtlich des Schnittstellenkriteriums die Analyseeinrichtung (10) ausgebildet ist, die Geschwindigkeit zu analysieren, mit der das Gaspedal des Fahrzeugs vom Fahrer losgelassen wird.

**8.** System nach einem der vorangehenden Ansprüche, **dadurch gekennzeichnet, dass** die Einrichtung zum Erfassen von Daten bezüglich der Führung des Fahrzeugs durch dessen Fahrer eine Einrichtung (6, 7, 8) zum Erfassen der Betätigung des Gaspedals, des Bremspedals und des Kupplungspedals des Fahrzeugs sowie eine Einrichtung (9) zur Eingabe zusätzlicher Daten bezüglich der Führung des Fahrzeugs hinsichtlich der Auswahl des Fahrmodus des Fahrzeugs, des Fahrstils und Verhaltens des Fahrers und von Variablen des Fahrzeugs umfasst.

**9.** System nach Anspruch 8, **dadurch gekennzeichnet, dass** die Einrichtung (9) zur Eingabe zusätzlicher Daten bezüglich der Führung des Fahrzeugs Tast- oder Schalthebel und/oder Druckknöpfe aufweist.

FIG.1

FIG.2

n-2 → n-1

n-1 → n

n → n+1

RAPPORT ACTUEL= n

FIG.7

FIG.3

FIG.4

FIG.5

FIG.6

FIG.8